# EUROPEAN PATENT APPLICATION

(11) **EP 4 831 356 A1**
(43) Date of publication of application: **28.10.2026**
(21) Application number: 24908025.0
(22) Date of filing: 17.12.2024
(51) Int. Cl.: C25B 15/02, C25B 1/04, C25B 13/07, C25B 9/77, C25B 15/027, C25B 15/025

(54) **CONTROL METHOD AND CONTROL DEVICE OF HIGH-TEMPERATURE WATER ELECTROLYSIS SYSTEM**

(30) Priority: 18.12.2023 KR 20230184890
(71) Applicant: POSCO Holdings Inc., Pohang-si, Gyeongsangbuk-do 37859 (KR)
(72) Inventor: AHN, Jin-Soo, Pohang-si, Gyeongsangbuk-do 37877 (KR); YANG, Ye-Jin, Pohang-si, Gyeongsangbuk-do 37877 (KR); LEE, Sang-Hyeok, Pohang-si, Gyeongsangbuk-do 37877 (KR)
(74) Representative: Pfenning, Meinig & Partner mbB
(86) International application number: PCT/KR2024/020527
(87) International publication number: WO 2025/135742

(57) **Abstract**

A control method of a high-temperature water electrolysis system, according to a first embodiment of the present invention, comprises the steps of: determining an operating temperature of a solid oxide water electrolysis stack in a high-temperature water electrolysis system including the solid oxide water electrolysis stack; selecting an operation mode of the solid oxide water electrolysis stack by comparing the operating temperature with a supply temperature of gas supplied to the solid oxide water electrolysis stack; determining a target voltage applied to the solid oxide water electrolysis stack according to the operation mode of the solid oxide water electrolysis stack; and applying the target voltage applied to the solid oxide water electrolysis stack in a step-up manner according to the operation mode of the solid oxide water electrolysis stack.

## Description

### Technical Field

The present disclosure relates to a high-temperature water electrolysis system, and more particularly to a control method and control device of a high-temperature water electrolysis system.

### Background Art

A water electrolysis system is a facility producing hydrogen from water through electrolysis, and consists of a hydrogen generating electrode, an oxygen generating electrode, and an electrolyte. Water electrolysis technology is broadly divided into high-temperature water electrolysis and low-temperature water electrolysis depending on an operating temperature of the system. High-temperature water electrolysis technology produces hydrogen using thermal energy of steam and electrical energy at approximately 600 to 800°C, and solid oxide electrolysis, using a solid oxide such as ceramic as an electrolyte, is representative. On the other hand, low-temperature water electrolysis technology, which operates at a relatively low temperature of 50 to 80°C, is classified into alkaline water electrolysis (AWE), cation exchange membrane water electrolysis (PEMWE), and anion exchange membrane water electrolysis (AEMWE), depending on the type of electrolyte used.

A Solid Oxide Electrolysis Cell (SOEC) produces hydrogen by electrolyzing water vapor, by reversing a process in which a Solid Oxide Fuel Cell (SOFC) consumes hydrogen and oxygen to produce water and electricity. A SOEC stack has a structure in which ceramic cells and metal components are cross-stacked in multiple layers, and an amount of hydrogen production increases in proportion to an amount of current applied to the stack.

Since the SOEC utilizes high-temperature water vapor, it requires a relatively smaller amount of electricity than low-temperature water vapor, producing hydrogen in a more efficient manner. The SOFC operates in such a manner that changes in current, temperature, or the like, applied to the stack occur gradually since the SOFC generates very large amounts of internal heat, and SOEC technology, derived from SOFC technology, also applies this method. In the SOEC technology, to minimize changes in a thermal stress gradient applied to the interior of the stack, current/voltage is applied in a ramp-up manner, in which the current/voltage is generally gradually increased to a target value while the stack is waiting to operate at a high temperature.

(Patent Document 1) Published Patent Application No. 2023-0048100 ("Solid oxide electrolysis cell system and method for operating the cell system")

### Summary of Invention

### Technical Problem

An embodiment of the present disclosure is to provide a control method and a control device of a high-temperature water electrolysis system. According to an embodiment of the present disclosure, according to the control method of a high-temperature water electrolysis system, current/voltage is not applied in a conventional ramp-up manner, but is applied in a step-up manner, so that the applied current/voltage reaches a target value instantaneously.

According to another embodiment of the present disclosure, according to a control method of a high-temperature water electrolysis system, current/voltage is applied by using a step-up manner and a conventional ramp-up manner together, so that the applied current/voltage reaches a target value.

According to an embodiment of the present disclosure, a control device of a high-temperature water electrolysis system applies current/voltage in a step-up manner, so that the applied current/voltage reaches a target value, or applies current/voltage by using a step-up manner and a conventional ramp-up manner together.

### Solution to Problem

According to a first embodiment of the present disclosure, provided is a control method of a high-temperature water electrolysis system, including a solid oxide water electrolysis stack, the control method including operations of: determining an operating temperature of the solid oxide water electrolysis stack, selecting an operating mode of the solid oxide water electrolysis stack by comparing the operating temperature with a supply temperature of gas supplied to the solid oxide water electrolysis stack, determining a target voltage applied to the solid oxide water electrolysis stack according to the operating mode of the solid oxide water electrolysis stack, and applying the target voltage applied to the solid oxide water electrolysis stack in a step-up manner according to the operating mode of the solid oxide water electrolysis stack.

In an embodiment of the present disclosure, the control method of a high-temperature water electrolysis system further includes an operation of releasing the target voltage applied to the solid oxide water electrolysis stack in a step-down manner to become an open circuit voltage (VCO).

In an embodiment of the present disclosure, in the control method of a high-temperature water electrolysis system, the operating mode of the solid oxide water electrolysis stack includes an exothermic mode, an endothermic mode, and a thermal neutral mode.

In an embodiment of the present disclosure, in the control method of a high-temperature water electrolysis system, the operation of selecting an operating mode of the solid oxide water electrolysis stack includes selecting a thermal neutral mode, when the gas supply temperature and the operating temperature are equal, selecting an endothermic mode, when the gas supply temperature is higher than the operating temperature, and selecting an exothermic mode, when the gas supply temperature is lower than the operating temperature.

In an embodiment of the present disclosure, the control method of a high-temperature water electrolysis system further includes an operation of determining a thermal neutral voltage applied to the solid oxide water electrolysis stack, so that the solid oxide water electrolysis stack operates in a thermal neutral mode, with respect to the operating temperature of the solid oxide water electrolysis stack.

In an embodiment of the present disclosure, in the control method of a high-temperature water electrolysis system, a target voltage applied to the solid oxide water electrolysis stack in the exothermic mode exceeds than a thermal neutral voltage, and a target voltage applied to the solid oxide water electrolysis stack in the endothermic mode is less than the thermal neutral voltage.

According to a second embodiment of the present disclosure, a control method of a high-temperature water electrolysis system, including a solid oxide water electrolysis stack, the control method including operations of: determining an operating temperature of the solid oxide water electrolysis stack, determining a thermal neutral voltage of the solid oxide water electrolysis stack, with respect to the operating temperature of the solid oxide water electrolysis stack, selecting an operating mode of the solid oxide water electrolysis stack by comparing the operating temperature with a supply temperature of gas supplied to the solid oxide water electrolysis stack, determining a target voltage applied to the solid oxide water electrolysis stack according to the operating mode of the solid oxide water electrolysis stack, and applying a thermal neutral voltage to the solid oxide water electrolysis stack in a step-up manner according to the operating mode of the solid oxide water electrolysis stack, and applying the same to a target voltage in a ramp-up/down manner, after a certain period of time has elapsed.

In an embodiment of the present disclosure, the operating mode of the solid oxide water electrolysis stack includes an exothermic mode, an endothermic mode, and a thermal neutral mode.

In an embodiment of the present disclosure, the operation of selecting an operating mode of the solid oxide water electrolysis stack includes selecting a thermal neutral mode, when the gas supply temperature and the operating temperature are equal, selecting an endothermic mode, when the gas supply temperature is higher than the operating temperature, and selecting an exothermic mode, when the gas supply temperature is lower than the operating temperature.

In an embodiment of the present disclosure, a target voltage applied to the solid oxide water electrolysis stack in the exothermic mode exceeds a thermal neutral voltage, and the target voltage applied to the solid oxide water electrolysis stack in the endothermic mode is less than the thermal neutral voltage.

According to a third embodiment of the present disclosure, a control device of a high-temperature water electrolysis system, including a solid oxide water electrolysis stack includes one or more processors and a storage medium for storing computer-readable instructions. When the computer-readable instruction is executed by the one or more processors, the one or more processors are configured to: determine an operating temperature of the solid oxide water electrolysis stack, determine a thermal neutral voltage of the solid oxide water electrolysis stack, with respect to the operating temperature of the solid oxide water electrolysis stack, select an operating mode of the solid oxide water electrolysis stack by comparing the operating temperature with a supply temperature of gas supplied to the solid oxide water electrolysis stack, determine a target voltage applied to the solid oxide water electrolysis stack according to the operating mode of the solid oxide water electrolysis stack, and apply a thermal neutral voltage to the solid oxide water electrolysis stack in a step-up manner according to the operating mode of the solid oxide water electrolysis stack, and cause the applied voltage to increase or decrease to a target voltage in a ramp-up/down manner, after a certain period of time has elapsed.

In an embodiment of the present disclosure, the operating mode of the solid oxide water electrolysis stack includes an exothermic mode, an endothermic mode, and a thermal neutral mode.

In an embodiment of the present disclosure, the processor selects a thermal neutral mode, when the gas supply temperature and the operating temperature are equal, selects an endothermic mode, when the gas supply temperature is higher than the operating temperature, and selects an exothermic mode, when the gas supply temperature is lower than the operating temperature.

In an embodiment of the present disclosure, a target voltage applied to the solid oxide water electrolysis stack in the exothermic mode exceeds a thermal neutral voltage, and a target voltage applied to the solid oxide water electrolysis stack in the endothermic mode is less than the thermal neutral voltage.

### Advantageous Effects of Invention

According to the present disclosure, a control method instantaneously raising or lowering current/voltage applied to a high-temperature water electrolysis stack according to the control method of the high-temperature water electrolysis system has the effect in which the lifespan of the stack is extended by mitigating a thermal stress gradient of the high-temperature water electrolysis stack, as compared to the conventional ramp-up manner, and securing the durability of the high-temperature water electrolysis system and maximizing an operating rate of the system.

### Brief Description of Drawings

FIG. 1 is a diagram illustrating a high-temperature water electrolysis system according to an embodiment of the present disclosure.
FIG. 2 is a schematic diagram illustrating a structure of a solid oxide water electrolysis cell, forming a high-temperature water electrolysis stack according to an embodiment of the present disclosure.
FIG. 3 is a graph illustrating a correlation between current applied to a high-temperature water electrolysis stack and heat generated or consumed in the stack in an embodiment of the present disclosure.
FIG. 4 is a graph illustrating a temperature change of a stack in an endothermic mode in which a voltage, lower than a thermal neutral voltage is applied in a high-temperature water electrolysis stack according to an embodiment of the present disclosure.
FIG. 5 is a flowchart illustrating a control method of a high-temperature water electrolysis system according to an embodiment of the present disclosure.
FIG. 6 is a diagram illustrating an example of a driving voltage applied to drive a stack in a step-up manner in a control method of a high-temperature water electrolysis system according to an embodiment of the present disclosure.
FIG. 7 is a diagram illustrating an experimental example of driving a stack in a step-up manner in a control method of a high-temperature water electrolysis system according to an embodiment of the present disclosure.
FIGS. 8A to 8C are enlarged views illustrating changes in current and temperature during an initial step-up period of each mode in the experimental example of FIG. 7.
FIG. 9 is a flowchart illustrating a control method of a high-temperature water electrolysis system according to another embodiment of the present disclosure.
FIG. 10 is a block diagram illustrating a computing device that can fully or partially implement a control device for a high-temperature water electrolysis system according to an embodiment of the present disclosure.

### Mode for Invention

Hereinafter, preferred embodiments of the present disclosure will be described in detail so that those skilled in the art could easily practice the present disclosure with reference to the accompanying drawings. However, in describing a preferred embodiment of the present disclosure in detail, if it is determined that a detailed description of a related known function or configuration may unnecessarily obscure the subject matter of the present disclosure, the detailed description will be omitted. In addition, the same reference numerals are used throughout the drawings for parts having similar functions and actions. In addition, in the present specification, terms such as 'upper,' 'upper portion,' 'upper surface,' 'lower,' 'lower portion,' 'lower surface,' 'side surface,' and the like are based on the drawings, and in practice, it may be different depending on a direction in which the components are disposed.

In addition, throughout the specification, when a part is said to be 'connected' to another part, this is not only when it is 'directly connected,' but also when it is 'indirectly connected' with other components therebetween. In addition, 'including' a certain component means that other components may be further included without excluding other components unless otherwise stated.

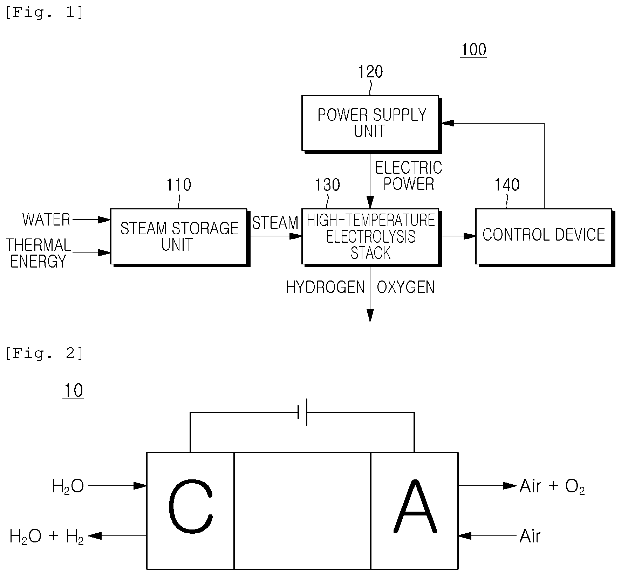

FIG.1 is a diagram illustrating a high-temperature water electrolysis system 100 according to an embodiment of the present disclosure. Referring to FIG. 1, the high-temperature water electrolysis system 100 according to an embodiment of the present disclosure includes a steam storage unit 110, a power supply unit 120, a high-temperature water electrolysis stack 130, and a control device 140.

The steam storage unit 110 stores water as high-temperature steam using a thermal energy source. The thermal energy source may include various forms of thermal energy sources, such as solar heat, nuclear heat, and process heat from a steelmaking process.

The power supply unit 120 produces electricity using renewable energy sources such as solar power, wind power, bioenergy, hydropower, geothermal energy, ocean energy, waste energy, as well as nuclear power, and supplies the produced electricity to the high-temperature water electrolysis stack 130 to produce hydrogen.

The high-temperature water electrolysis stack 130 produces hydrogen using steam supplied from the steam storage unit 110 and power supplied from the power supply unit 120. The high-temperature water electrolysis stack 130 utilizes a high-temperature water electrolysis method and produces hydrogen by electrochemically decomposing the supplied high-temperature steam. The high-temperature water electrolysis method electrolyzes steam at high temperatures, resulting in lower electrochemical energy consumption for hydrogen production, compared to the conventional low-temperature water electrolysis method, thus providing high economic feasibility and energy efficiency.

The control device 140 may be configured to determine an operating temperature of the high-temperature water electrolysis stack 130, and select an operating mode of the high-temperature water electrolysis stack 130 by comparing the operating temperature with a supply temperature of steam supplied to the water electrolysis stack 130. The control device 140 may be configured to determine a target voltage applied to the high-temperature water electrolysis stack 130 according to the operating mode of the high-temperature water electrolysis stack 130, and control the power supply unit 120, so that the target voltage applied to the high-temperature water electrolysis stack 130 may be applied in a step-up manner according to the operating mode of the high-temperature water electrolysis stack 130.

In another embodiment of the present disclosure, the control device 140 may be configured to determine an operating temperature of the high-temperature water electrolysis stack 130 and, with respect to such an operating temperature, determine a thermal neutral voltage of the high-temperature water electrolysis stack 130. The control device 140 may be configured to select an operating mode of the high-temperature water electrolysis stack 130 by comparing the operating temperature of the stack 130 with a supply temperature of steam supplied to the high-temperature water electrolysis stack 130, and determine a target voltage applied to the high-temperature water electrolysis stack 130 according to the operating mode, and control the power supply unit 120 to apply a thermal neutral voltage is applied to the high-temperature water electrolysis stack 130 in a step-up manner according to the operating mode, and cause the applied voltage to increase or decrease to a target voltage in a ramp-up/down manner, after a certain period of time has elapsed.

FIG. 2 is a diagram schematically illustrating a structure of a high-temperature water electrolysis cell 10, constituting a high-temperature water electrolysis stack according to an embodiment of the present disclosure. In the high-temperature water electrolysis cell 10, an electrolysis reaction of steam occurs. At a cathode (C) electrode, a reduction reaction in which steam is decomposed into hydrogen and oxygen ions occurs, and at an anode (A) electrode, an oxidation reaction in which oxygen ions having passed from the cathode (C) electrode through an electrolyte are converted into oxygen gas occurs. From an electrochemical perspective, there is no need to inject air into the anode (A) electrode of the high-temperature water electrolysis cell 10, but since steam supplied from a steam storage unit to the cathode (C) electrode has pressure, high-temperature air may be injected into the anode (A) electrode to maintain the temperature and balance the pressure of the high-temperature water electrolysis cell 10.

The high-temperature water electrolysis cell 10 may be a solid oxide electrolysis cell SOEC, using a solid oxide such as ceramic as an electrolyte, and generally uses a thin ceramic cell with a thickness of less than 1 mm, and ceramic cells and metal components are stacked in multiple layers to form a high-temperature water electrolysis stack. Due to the characteristics of ceramic materials, there is a problem that the ceramic materials easily break under applied stress, so it is important to maintain pressure balance for the gas flowing into the high-temperature water electrolysis cell 10. It is preferable to use high-pressure steam in terms of system operation and hydrogen production, but because the high-temperature water electrolysis cell 10 is vulnerable to high-pressure gas, a separate pressure vessel (not shown) is used.

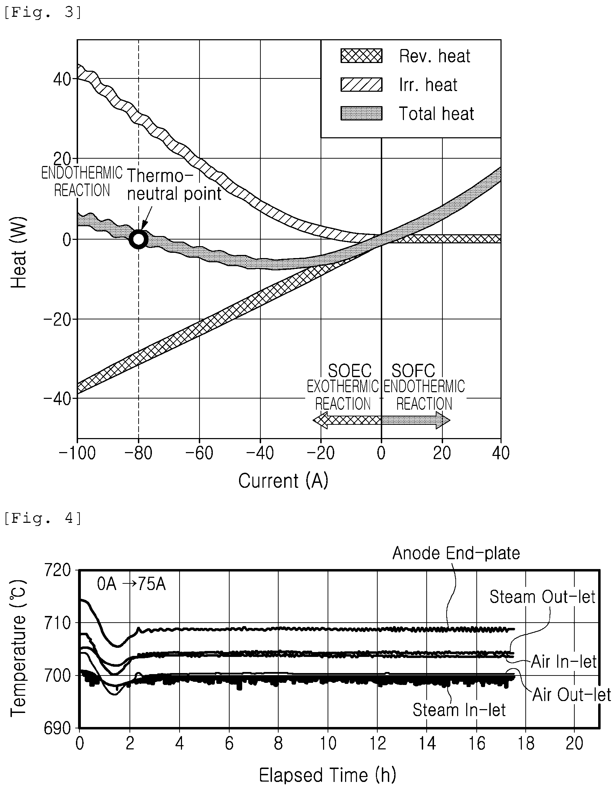

FIG. 3 is a graph illustrating a correlation between current applied to a high-temperature water electrolysis stack and heat generated or consumed in the stack in an embodiment of the present disclosure. The graph illustrated in FIG. 3 illustrates the results of analyzing endothermic and exothermic behaviors of the high-temperature water electrolysis stack when a 5 kW class high-temperature water electrolysis stack is operated at 700°C in an embodiment of the present disclosure. As illustrated in FIG. 3, unlike SOFCs, which always generate heat in all operation sections, SOECs show that as the applied current increases, the SOECs behave in the endothermic section by passing through a thermo-neutral point and then returning to the exothermic section. In addition, an amount of heat generated in a section in which a very high current is applied (e.g., a section in which 100A or more is applied) is less than 1/3 of the amount of heat generated in the general SOFC operating section (a section in which 0.4A or more is applied).

A high-temperature water electrolysis reaction is an endothermic reaction (Reversible heat, TΔS), but when the reaction occurs due to the application of current, heat is generated by Irreversible Heat (electrochemical overpotential), which is an irreversible loss. Therefore, depending on the application of current, endothermic and exothermic reactions coexist, and a thermal neutral condition is 1.284V @ 700°C, which can be calculated using a water electrolysis reaction equation ΔH = -247.7 kJ/mol.

FIG. 4 is a graph illustrating a temperature change of a stack in an endothermic mode in which a voltage, lower than a thermal neutral voltage is applied in a high-temperature water electrolysis stack according to an embodiment of the present disclosure. In an embodiment of the present disclosure, when a driving current is applied to a 5kW class high-temperature water electrolysis stack, while being slowly increased from 0A to 75A (endothermic mode lower than the thermal neutral voltage) and the change in temperature inside the stack is observed, it is shown that temperatures of an anode end-plate, steam inlet, steam outlet, air inlet, and air outlet decrease for about 1 hour and 30 minutes after the driving current is applied, and then increase again after about 1 hour and 30 minutes have elapsed. It is shown that the temperature increases and then stabilizes at a constant temperature after about 2 hours. In other words, when the driving current is slowly increased and applied to the stack, temperature changes and the resulting internal thermal stress gradient cannot be avoided.

According to an embodiment of the present disclosure, a control method of a high-temperature water electrolysis system, a target current/voltage is applied to a high-temperature water electrolysis stack in a step-up manner when a driving current/voltage is applied to the high-temperature water electrolysis stack, thereby reaching a target current/voltage immediately without passing through an endothermic mode. The step-up manner may avoid changes in temperature and resulting internal thermal stress gradients that occur in a ramp-up manner due to passing through the endothermic section.

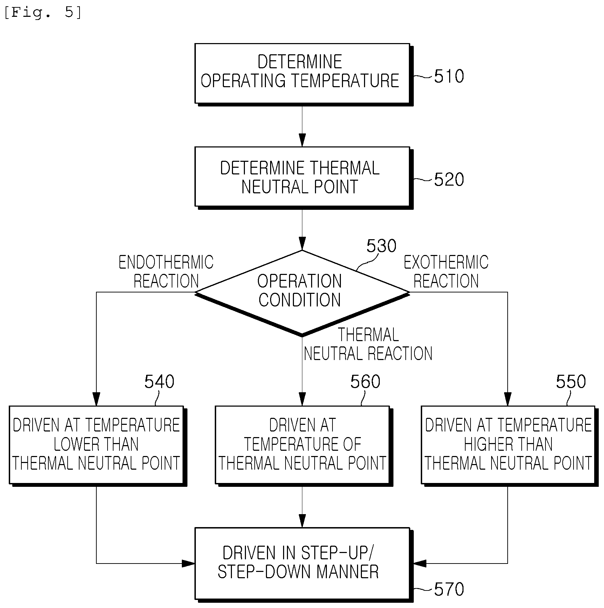

FIG. 5 is a flowchart illustrating a method of driving a high-temperature water electrolysis stack in a step-up manner in a high-temperature water electrolysis system according to an embodiment of the present disclosure. First, an operating temperature of the high-temperature water electrolysis stack is determined 510. Generally, a high-temperature water electrolysis stack produces hydrogen by electrolyzing high-temperature steam at about 600 to 800°C. Once the operating temperature of the high-temperature water electrolysis stack is determined, a thermal neutral point of the high-temperature water electrolysis stack is determined based thereon 520. As described above, the thermal neutral point of the high-temperature water electrolysis stack may be calculated using a water electrolysis reaction equation ΔH = -247.7 kJ/mol. Next, an operating condition of the high-temperature water electrolysis stack is selected 530.

The high-temperature water electrolysis stack is not necessarily operated under thermal neutral conditions. Generally, when a heat source (steam) is supplied in the industrial sector, the temperature of the steam varies from 100°C to 900°C, and in some cases, water should be used. For example, a process heat of a steel mill supplies steam at a temperature of about 150 to 190°C, and in a light water reactor, steam may be supplied at a temperature of 150 to 340°C depending on a portion from which the steam is extracted, and in the case of a 4^{th} generation Small Modular Reactor SMR, steam at a temperature of about 700 to 850°C may be supplied. When low-temperature steam is supplied, supply steam should be heated by a stack exhaust gas, and in this case, it is advantageous for the stack to operate in an exothermic mode in terms of system efficiency. When high-temperature steam is supplied, heat remains and an exhaust gas temperature becomes very high, so in this case, it is desirable to operate the stack in an endothermic mode.

When the operating mode of the high-temperature water electrolysis stack is an endothermic mode, the high-temperature water electrolysis stack is driven with a current/voltage, lower than a thermal neutral point 540, and when the operating mode of the high-temperature water electrolysis stack is an exothermic mode, the high-temperature water electrolysis stack is driven with a current/voltage, higher than the thermal neutral point 550, and when the operating mode of the high-temperature water electrolysis stack is a thermal neutral mode, the high-temperature water electrolysis stack is driven with the current/voltage of the thermal neutral point 560. When driving the high-temperature water electrolysis stack, a driving voltage/current is driven in a step-up/step-down manner, which raises or lowers the driving voltage/current to a target value at once, rather than in a ramp-up/down manner, which raises or lowers the driving voltage/current to the target value gradually.

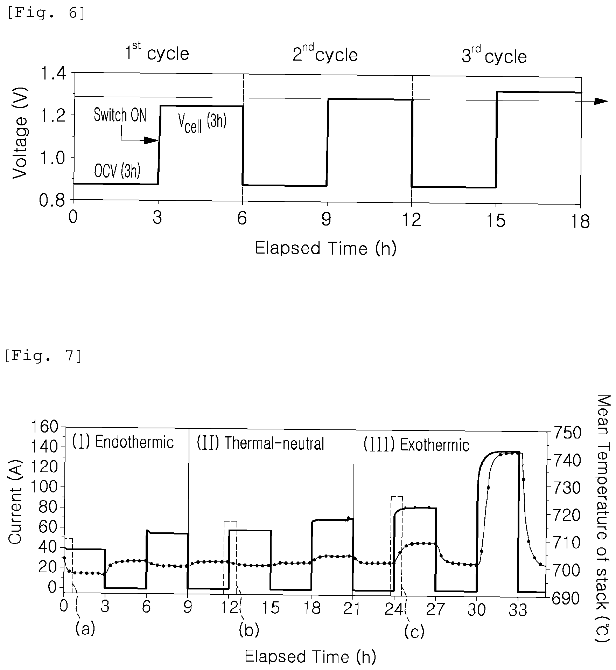

FIG. 6 is a diagram illustrating an example of a voltage applied when driving a stack in a step-up manner in a high-temperature water electrolysis system according to an embodiment of the present disclosure. A high-temperature water electrolysis stack with an Open Circuit Voltage (OCV), which is a voltage at driving current of 0A, of 0.891V is driven by applying current in a step-up manner, rather than the conventional ramp-up manner using a switch-on method, and similarly, the application of current is stopped using a step-down manner. The 1^{st} Cycle is an endothermic phase, where the voltage applied to the stack is lower than a thermal neutral voltage. The 2^{nd} Cycle is a thermal neutral phase, where the applied voltage is equal to a thermal neutral voltage. The 3^{rd} Cycle is an example of an experiment conducted in the exothermic phase, where the voltage applied to the stack is higher than a thermal neutral voltage. When the stack is operated in a thermal neutral mode as in the 2^{nd} Cycle, a change in a thermal stress gradient applied to the stack is minimal.

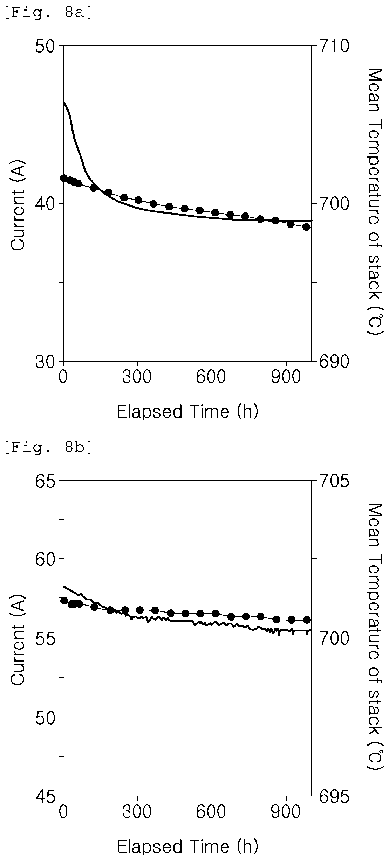

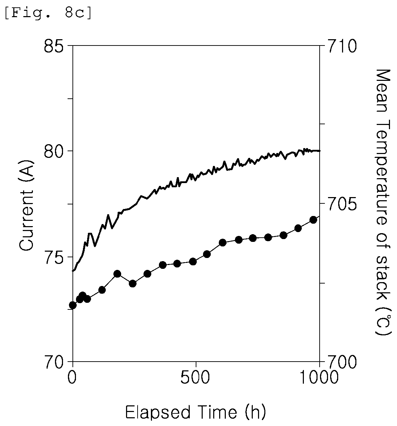

FIG. 7 is a diagram illustrating an experimental example of driving a stack in a step-up manner in a high-temperature water electrolysis system according to an embodiment of the present disclosure. FIGS. 8A to 8C are diagrams illustrating enlarged views of a current and temperature during an initial step-up period of each mode in the experimental example of FIG. 7. That is, FIG. 8A illustrates an enlarged view of portion (a) in FIG. 7, FIG. 8B illustrates an enlarged view of portion (b) in FIG. 7, and FIG. 8C illustrates an enlarged view of portion (c) in FIG. 7.

A temperature change(ΔT) of the stack depends on whether driving current is in an endothermic section or exothermic section. As illustrated in the enlarged view in FIG. 8A, the temperature of the stack gradually decreases as it stabilizes after an overshoot occurs in the driving current during the initial stage when the driving current is applied in a step-up manner in the endothermic section. In addition, as illustrated in the enlarged view in FIG. 8B, it is illustrated that the temperature of the stack remains almost unchanged while the driving current stabilizes after an overshoot occurs in the driving current during the initial stage when the driving current is applied in a step-up manner in the thermal neutral section. As illustrated in the enlarged view in FIG. 8C, it is illustrated that the temperature of the stack increases together with the driving current during the initial stage when the driving current is applied in a step-up manner in the exothermic section. Therefore, if the driving current is applied to the stack in an On/Off manner, the thermal stress of the stack may be minimized, thereby extending the lifespan of the stack.

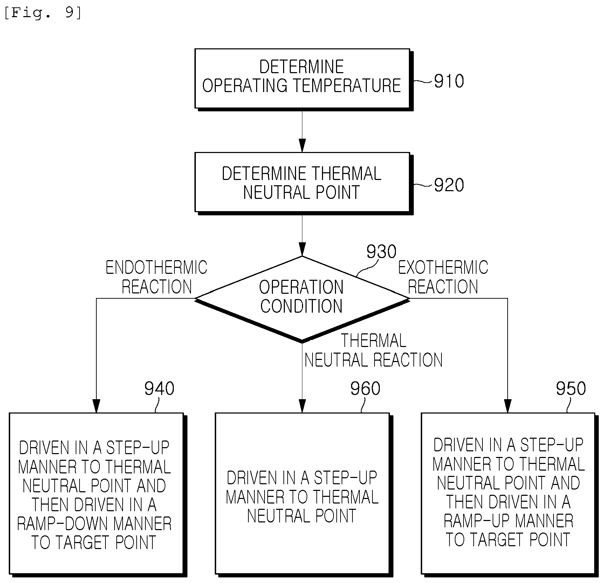

FIG. 9 is a flowchart illustrating a method of driving a high-temperature water electrolysis stack in a step-up manner in a high-temperature water electrolysis system according to another embodiment of the present disclosure. As in the embodiment illustrated in FIG. 5, an operation of determining an operating temperature of the high-temperature water electrolysis stack 910, an operation of determining a thermal neutral point of the high-temperature water electrolysis stack based on the operating temperature of the high-temperature water electrolysis stack 920, and an operation of selecting an operating condition of the high-temperature water electrolysis stack 930 are equal. When an operating mode of the high-temperature water electrolysis stack is a thermal neutral mode, the high-temperature water electrolysis stack is driven in a step-up/step-down manner in which the high-temperature water electrolysis stack is raised or lowered to current/voltage of the thermal neutral point at once 960. When the operating mode of the high-temperature water electrolysis stack is an endothermic mode, the high-temperature water electrolysis stack may be driven in a ramp-down manner in which the current/voltage of the high-temperature water electrolysis stack is raised to the current/voltage of the thermal neutral point at once, and then is waiting for a certain period of time, for example, 30 minutes to 2 hours, and then is gradually lowered to a target current/voltage in the endothermic mode 940. When the operating mode of the high-temperature water electrolysis stack is an exothermic mode, the high-temperature water electrolysis stack may be driven in a ramp-up manner in which the driving current/voltage of the high-temperature water electrolysis stack is raised to the current/voltage of the thermal neutral point at once, and then is waiting for a certain period of time, for example, about 30 minutes to 2 hours, and then is gradually raised to the target current/voltage in the exothermic mode 950. That is, when a target voltage is in an exothermic or endothermic mode, rather than a thermal neutral mode, the high-temperature water electrolysis stack driving current/voltage may be switched on to a thermal neutral current/voltage at once, and after waiting for a certain period of time, for example, about 30 minutes to 2 hours, it can be gradually ramped up/down to the target current/voltage of the exothermic/endothermic mode. The ramp-up/down rate can be, for example, about 0.5 to 2 A/min based on current control. When operated in this manner, thermal shock caused by endothermic/exothermic reactions applied to the interior of the high-temperature water electrolysis stack may be minimized. The experimental examples illustrated in FIG. 7 and FIGS. 8A to 8C above show that when a high-temperature water electrolysis stack is controlled by switching on/off at various voltages at once, the current responds quickly to the voltage being controlled, and it may be more desirable to operate the high-temperature water electrolysis stack in the manner illustrated in FIG. 9 to minimize thermal shock.

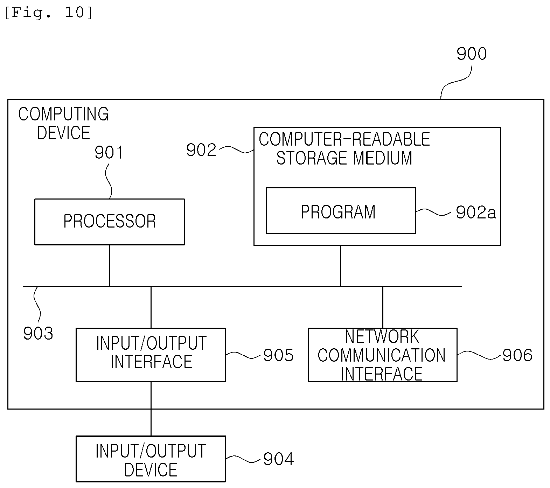

FIG. 10 is a block diagram illustrating a computing device that can fully or partially implement a control device for a high-temperature water electrolysis system according to an embodiment of the present disclosure.

As illustrated in FIG. 9, the computing device 900 includes at least one processor 901, a computer-readable storage medium 902, and a communication bus 903.

The processor 901 may cause the computing device 900 to operate according to the above-described exemplary embodiments. For example, the processor 901 may execute one or more programs store in the computer-readable storage medium 902. The one or more programs may include one or more computer executable instructions, wherein, when executed by the processor 901, the computer-readable executable instructions may be configured to cause the computing device 900 to perform operations according to an exemplary embodiment.

The computer-readable storage medium 902 is configured to store computer-executable instructions or program code, program data, and/or other suitable forms of information. A program 902a stored on the computer-readable storage medium 902 includes a set of instructions executable by the processor 901. In an embodiment, the computer-readable storage medium 902 may include a memory (a volatile memory such as a random access memory, a non-volatile memory, or a suitable combination thereof), one or more magnetic disk storage devices, optical disk storage devices, flash memory devices, other forms of storage media that can be accessed by the computing device 900 and store desired information, or suitable combinations thereof.

The communication bus 903 interconnects various other components of the computing device 900, including the processor 901 and the computer-readable storage medium 902.

The computing device 900 may also include one or more input/output interfaces 905 and one or more network communication interfaces 906 providing an interface for one or more input/output devices 904. The input/output interface 905 and the network communication interface 906 are connected to the communication bus 903. The network may be either a cellular network, such as a global system for mobile communications (GSM), enhanced data rates for GSM evolution (EDGE), a general packet radio service (GPRS), a code division multiple access (CDMA), a time division CDMA(TD-CDMA), a universal mobile telecommunications system (UMTS), a long term evolution (LTE), or another cellular network. In addition, the network communication interface 406 may further include Near Field Communication (NFC), one of the wireless tag technologies.

The input/output device 904 may be connected to other components of the computing device 900 through the input/output interface 905. The exemplary input/output device 904 may include an input device such as a pointing device (a mouse, a trackpad, or the like), a keyboard, a touch input device (a touchpad, a touchscreen, or the like), a voice or sound input device, various types of sensor devices, and/or a photographing device, and an output device such as a display device, a printer, a speaker, and/or a network card. The exemplary input/output device 904 may be included inside the computing device 900 as a component constituting the computing device 900, or may be connected to the computing device 900 as a separate device, distinct from the computing device 900.

Meanwhile, embodiments of the present disclosure may include a program for performing the methods described in this specification on a computer, and a computer readable recording medium including the program. The computer-readable recording medium may include program instructions, local data files, local data structures, or the like, alone or in a combination thereof. The medium may be specially designed and configured for the present disclosure, or may be commonly available in the field of computer software. Examples of the computer-readable medium may include a hardware device specially configured to store a magnetic medium such as hard disks, floppy disks and magnetic tapes, an optical recording medium such as CD-ROMs and DVDs, and program instructions such as ROM, RAM, and a flash memory and perform the same. Examples of the program may include not only machine language codes generated by a compiler, but also high-level language codes that may be executed by a computer using an interpreter.

The present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes would be obvious to those of ordinary skill in the art.

## Claims

1. A control method of a high-temperature water electrolysis system, including a solid oxide water electrolysis stack, the control method comprising operations of:
determining an operating temperature of the solid oxide water electrolysis stack;
selecting an operating mode of the solid oxide water electrolysis stack by comparing the operating temperature with a supply temperature of gas supplied to the solid oxide water electrolysis stack;
determining a target voltage applied to the solid oxide water electrolysis stack according to the operating mode of the solid oxide water electrolysis stack; and
applying the target voltage applied to the solid oxide water electrolysis stack in a step-up manner according to the operating mode of the solid oxide water electrolysis stack.

2. The control method of a high-temperature water electrolysis system of claim 1, further comprising an operation of:
releasing the target voltage applied to the solid oxide water electrolysis stack in a step-down manner to become an open-circuit voltage.

3. The control method of a high-temperature water electrolysis system of claim 1, wherein the operating mode of the solid oxide water electrolysis stack includes an exothermic mode, an endothermic mode, and a thermal neutral mode.

4. The control method of a high-temperature water electrolysis system of claim 3, wherein the operation of selecting the operating mode of the solid oxide water electrolysis stack comprises:
selecting a thermal neutral mode, when the gas supply temperature and the operating temperature are equal,
selecting an endothermic mode, when the gas supply temperature is higher than the operating temperature; and
selecting an exothermic mode, when the gas supply temperature is lower than the operating temperature.

5. The control method of a high-temperature water electrolysis system of claim 3, further comprising an operation of:
determining a thermal neutral voltage applied to the solid oxide water electrolysis stack so that the solid oxide water electrolysis stack operates in a thermal neutral mode, with respect to the operating temperature of the solid oxide water electrolysis stack.

6. The control method of a high-temperature water electrolysis system of claim 5, wherein a target voltage applied to the solid oxide water electrolysis stack in the exothermic mode exceeds a thermal neutral voltage.

7. The control method of a high-temperature water electrolysis system of claim 5, wherein a target voltage applied to the solid oxide water electrolysis stack in the endothermic mode is less than the thermal neutral voltage.

8. A control method of a high-temperature water electrolysis system including a solid oxide water electrolysis stack, comprising operations of:
determining an operating temperature of the solid oxide water electrolysis stack;
determining a thermal neutral voltage of the solid oxide water electrolysis stack, with respect to the operating temperature of the solid oxide water electrolysis stack;
selecting an operating mode of the solid oxide water electrolysis stack by comparing the operating temperature with a supply temperature of gas supplied to the solid oxide water electrolysis stack;
determining a target voltage applied to the solid oxide water electrolysis stack according to the operating mode of the solid oxide water electrolysis stack; and
applying a thermal neutral voltage to the solid oxide water electrolysis stack in a step-up manner according to the operating mode of the solid oxide water electrolysis stack, and applying the same to a target voltage in a ramp-up/down manner, after a certain period of time has elapsed.

9. The control method of a high-temperature water electrolysis system of claim 8, wherein the operating mode of the solid oxide water electrolysis stack includes an exothermic mode, an endothermic mode, and a thermal neutral mode.

10. The control method of a high-temperature water electrolysis system of claim 9, wherein the operation of selecting the operating mode of the solid oxide water electrolysis stack comprises:
selecting a thermal neutral mode, when the gas supply temperature and the operating temperature are equal;
selecting an endothermic mode, when the gas supply temperature is higher than the operating temperature; and
selecting an exothermic mode, when the gas supply temperature is lower than the operating temperature.

11. The control method of a high-temperature water electrolysis system of claim 9, wherein a target voltage applied to the solid oxide water electrolysis stack in the exothermic mode exceeds a thermal neutral voltage.

12. The control method of a high-temperature water electrolysis system of claim 9, wherein a target voltage applied to the solid oxide water electrolysis stack in the endothermic mode is less than a thermal neutral voltage.

13. A control device of a high-temperature water electrolysis system including a solid oxide water electrolysis stack, comprising:
one or more processors; and
a storage medium for storing computer-readable instructions,
wherein when the computer-readable instruction is executed by the one or more processors,
the one or more processors are configured to:
determine an operating temperature of the solid oxide water electrolysis stack,
determine a thermal neutral voltage of the solid oxide water electrolysis stack, with respect to the operating temperature of the solid oxide water electrolysis stack,
select an operating mode of the solid oxide water electrolysis stack by comparing the operating temperature with a supply temperature of gas supplied to the solid oxide water electrolysis stack,
determine a target voltage applied to the solid oxide water electrolysis stack according to the operating mode of the solid oxide water electrolysis stack, and
apply a thermal neutral voltage to the solid oxide water electrolysis stack in a step-up manner according to the operating mode of the solid oxide water electrolysis stack, and cause the applied voltage to increase or decrease to a target voltage in a ramp-up/down manner, after a certain period of time has elapsed.

14. The control device of a high-temperature water electrolysis system of claim 13, wherein the operating modes of the solid oxide water electrolysis stack include an exothermic mode, an endothermic mode, and a thermal neutral mode.

15. The control device of a high-temperature water electrolysis system of claim 13, wherein the processor is configured to:
select a thermal neutral mode, when the gas supply temperature and the operating temperature are equal,
select an endothermic mode, when the gas supply temperature is higher than the operating temperature, and
select an exothermic mode, when the gas supply temperature is lower than the operating temperature.

16. The control device of a high-temperature water electrolysis system of claim 15, wherein a target voltage applied to the solid oxide water electrolysis stack in the exothermic mode exceeds a thermal neutral voltage.

17. The control device of a high-temperature water electrolysis system of claim 15, wherein a target voltage applied to the solid oxide water electrolysis stack in the endothermic mode is less than the thermal neutral voltage.
